# EUROPÄISCHE PATENTSCHRIFT

(11) **EP 2 145 727 B1**
(45) Veröffentlichungstag und Bekanntmachung des Hinweises auf die Patenterteilung: **16.10.2013**
(21) Anmeldenummer: 08012879.6
(22) Anmeldetag: 17.07.2008
(51) Int. Cl.: B23Q 5/34, B30B 1/26, B21F 1/00, B21D 28/00

(54) **Schlittenaggregat**
Sliding unit
Unité coulissante

(43) Veröffentlichungstag der Anmeldung: 20.01.2010
(73) Patentinhaber: Garth, Harald, 87509 Immenstadt (DE)
(72) Erfinder: Garth, Harald, 87509 Immenstadt (DE)
(74) Vertreter: Hoppe, Lars

(56) Entgegenhaltungen:
- EP-A- 0 875 311
- DE-A1- 4 435 282
- DE-A1- 4 437 958
- DE-A1- 19 622 405
- DE-A1- 19 953 283
- DE-A1-102007 004 165
- DE-B3- 10 327 018
- DE-U1- 29 511 071
- US-A1- 2004 231 396

## Beschreibung

Die vorliegende Erfindung betrifft ein Schlittenaggregat gemäß dem Oberbegriff des Patentanspruchs 1. Solch ein Schlittenaggregat ist z.B. in der DE-U-29511071 offenbart.

Schlittenaggregate werden in Sondermaschinen zum Stanzen, Biegen und Montieren von Blech- oder Kunststoffteilen als Antriebe und Steuerungen für Werkzeuge oder Werkzeugträger, für Handlingvorrichtungen oder für Transportvorrichtungen verwendet. Sie führen Arbeitstakte von mehr als 100 pro Sekunde, oftmals mehr als 400 pro Sekunde aus. Die Schlittenaggregate werden dabei mit ihrem Gehäuse an der Sondermaschine befestigt, die auch den oder die Antriebe der Schlittenaggregate und eventuelle Antriebskraftüberträger trägt. Am Gehäuse des Schlittenaggregats ist eine angetriebene Kurvenscheibe gelagert. Die Kurvenscheibe weist dabei eine Arbeitskurvenscheibe und eine axial dazu beabstandete Rückholkurvenscheibe auf, wobei die Kurvenscheibe über anliegende Abnahmerollen für Arbeits- und Rückholkurvenscheibe mit einem linear beweglich geführten Schlitten in Wirkverbindung steht. Hierbei übertragen die Abnahmerollen die von der Kurvenscheibe übertragenen Kräfte auf den Schlitten. Der Schlitten wiederum trägt ein Werkzeug, eine Werkzeugaufnahme, eine Handlingvorrichtung oder ist mit einer Werkstücktransportvorrichtung verbunden.

Da die genannten Sondermaschinen in der Regel mehrere, in Bearbeitungsrichtung hintereinander angeordnete Arbeitsstationen aufweisen, beispielsweise mehrere Biegestationen mit vorgeschalteter Stanzstation oder eine oder mehrere Stationen, in denen ein Grundkörper mit unterschiedlichen, nacheinander zur Montagestrecke herangeführten Bauteilen bestückt wird, weisen sie ebenfalls eine Mehrzahl an Schlittenaggregaten auf, die oftmals unmittelbar nebeneinander angeordnet sind. An Sondermaschinen zur Bearbeitung kleiner Werkstücke können insbesondere bei mehrstufigen Arbeitsstationen ohne zwischenzeitlichen Werkstücktransport die üblichen, unmittelbar nebeneinander angeordneten Schlittenaggregate ihre Werkzeuge/Handlingvorrichtungen nur über Kröpfungen oder dergleichen an das Werkstück heranbringen. Dies hat große Nachteile, da aufgrund der hohen Taktzahl und der von der Bewegungsrichtung des Schlittens abweichenden Kraftübertragungsrichtung eine absolut exakte Einstellung des Schlittenaggregats nebst ständiger Nachregelung erforderlich ist, da sonst gerade bei Werkstücken aus weichem Material wie Kunststoff eine exakte, zerstörungsfreie Bearbeitung nicht gewährleistet werden kann.

Um diese räumlichen Probleme zu vermeiden, ist für Sondermaschinen bekannt, anstelle von mechanischen auch pneumatische, hydromechanische oder elektrische Werkzeug- und Transportvorrichtungsantriebe zu verwenden. Diese Antriebe sind zwar kleiner als die bekannten Schlittenaggregate, können bei den Eingangs genannten hohen Arbeitstaktraten und den erforderlichen komplexen Anforderungen hinsichtlich Verstellung der Hublage, des maximalen Hubs, der Aufsetzgeschwindigkeit, der Konstanz der Linearbewegung, der Minimierung der Totphase, eines Nachhaltens im Totpunkt und dergleichen nicht zufrieden stellend arbeiten, bzw. erfordern erheblichen Regelungsbedarf. Prinzipiell wäre daher mechanischen Werkzeug- und Transportantrieben und somit den Schlittenaggregaten der Vorzug zu geben.

Aus der DE 295 11 071 und der DE 103 27 018 sind Schlittenaggregate bekannt, bei denen die Kurvenscheibe parallel zu einer Befestigungsseite des Schlittenaggregats und parallel zu einer Werkstückbearbeitungsrichtung angeordnet sind. Diese Kurvenscheiben sind von einer Maschinenbedienseite her zugänglich, so dass sie ausgetauscht werden können. Sie sind fliegend gelagert. Bei diesen Schlittenaggregaten bestimmt der maximale Durchmesser der Kurvenscheibe die Breite der Schlittenaggregate, so dass die Schlittenaggregate nicht dichter als der Durchmesser einer Kurvenscheibe aneinander angenähert werden können. Übliche Breiten betragen hierbei mehr als 200 mm. Zur Reduzierung des Platzbedarfs eines Schlittenaggregats ist aus der DE 44 35 282 bekannt, zwei L-förmige Träger vorzusehen, die mit ihren langen Schenkeln Rücken an Rücken aneinander und mit ihren kurzen Schenkeln parallel zur Werkstückbearbeitungsrichtung an einer Sondermaschine befestigt sind, wobei die Kurvenscheiben orthogonal zu dieser Werkstückbearbeitungsrichtung jeweils an dem langen Schenkel der L-förmigen Träger befestigt sind. Der Antrieb der Kurvenscheiben erfolgt über Zahnräder durch den langen Schenkel von der Rückseite der Sondermaschine her. Durch diese Anordnung ist die gewählte Breite auf etwa 200 mm für zwei Schlittenaggregate reduziert, wobei der Austausch der Kurvenscheiben wiederum von einer Maschinenbedienseite her erfolgt, allerdings unter erschwerten Bedingungen im Vergleich zu den Eingangs genannten Schlittenaggregaten. Nachteilig an diesem Stand der Technik sind jedoch zum einen die noch stets fliegende Lagerung der Kurvenscheiben, die aus der gewählten Befestigungssituation resultiert und zum anderen die ungünstige, um 90° gewinkelte Führungssituation des Schlittens. Dieser ist an seinem oberen Ende durch ein von oben am Doppel-L-Träger befestigtes Gestell und an seinem unteren Ende in einer Nut einer Führungsplatte geführt, wobei die Führungsplatte parallel zur Werkstückbearbeitungsrichtung an der Sondermaschine angeordnet ist.

Aus der US 2004/0231396 A1 geht eine mechanische Pressmaschine hervor, bei welcher eine zentrale Kurvenscheibe in einem Gehäuse vorgesehen ist, welche eine erste Kurvenscheibe antreibt, durch die der Stempel auf und ab bewegt wird. Diese Kurvenscheiben werden über Führungsstangen federgelagert und durch Federn in einer anliegenden Position zur Kurvenscheibe gelagert. Dieser ersten Kurvenscheibe ist eine zweite Kurvenscheibe gegenüberliegend positioniert, welche an der zentralen Kurvenscheibe abrollt. Diese gegenüberliegende zweite Kurvenschelbe ist wiederum federgelagert am Gehäuse abgestützt. Durch die Federlagerung der ersten und zweiten Kurvenscheibe der zentralen Kurvenscheibe ist eine zwangsgesteuerte Arbeits- und Rückholbewegung eines Stempels bei hohen Taktzeiten nicht oder nur bedingt möglich.

Aus der DE 196 22 405 A1 geht eine mechanische Pressmaschine hervor, bei der in einem Gehäuse getrennt voneinander ein oberer und unterer Schlitten durch Kurvenscheiben auf und ab bewegt werden. Hierfür sind drei Kurvenscheiben vorgesehen, wobei eine mittlere Kurvenscheibe unmittelbar den oberen und unteren Schlitten gegenläufig auf und ab bewegt, wobei zwei weitere Kurvenscheiben an Gelenkhebeln angreifen, welche ebenfalls mit dem Schlitten verbunden sind. Eine solche Pressmaschine eignet sich aufgrund der Größe des Bauraumes nicht zum Antrieb von Werkzeugen, welche insbesondere mit hohen Taktraten angetrieben werden sollen.

Es ist daher Aufgabe der vorliegenden Erfindung, ein schmalbauendes und stark belastbares Schlittenaggregat anzugeben, das als Werkzeugträger, Handlings- oder Transportvorrichungsantrieb verwendbar ist. Es ist ebenfalls Aufgabe der Erfindung, eine Werkstücktransportvorrichtung anzugeben, die hohe Taktraten ermöglicht und schließlich eine Sondermaschine anzugeben, die bei geringer Baugröße hohe Taktraten ermöglicht.

Diese Aufgabe wird gelöst mit einem Schlittenaggregat gemäß den Merkmalen des Patentanspruchs 1 sowie der Verwendung eines solches Schlittenaggregats gemäß den Merkmalen des Patentanspruchs 8. Diese Anordnung der Kurvenscheibe behält mit Vorteil die Unabhängigkeit der Schlittenaggregatbreite von dem Kurvenscheibendurchmesser bei, führt jedoch gleichzeitig dazu, dass die Kurvenscheibe stabil gelagert ist und somit selbst bei hohen Arbeitstakten und damit hohen Drehzahlen über einen langen Zeitraum einen Schlitten konstant und mit gleich bleibenden Parametern, wie beispielsweise Hublänge und Hubdauer, antreibt, Mit großem Vorteil nutzt die Erfindung den freien Raum vor und hinter dem Schliti tenaggregat. Es ist dabei nicht erforderlich, dass die Kurvenscheibe mittig in dem Gehäuse angeordnet ist, eine außermittige Anordnung ist durchaus denkbar. Dadurch, dass der Schlitten im Inneren des Gehäuses geführt ist, resultiert ein geschlossener, arbeitssicherer Aufbau, der Schlitten ist auch bei hohen Arbeitstakten stets sicher geführt. Des Weiteren wird die Kraft, die die Kurvenscheibe auf den Schlitten ausübt, besonders effizient und verlustfrei übertragen. Ergänzend wird mit großem Vorteil ein kompaktes Bauteil zur Verfügung gestellt. Die Anschlussvorrichtung ermöglicht den Anschluss eines Werkzeugs, einer Werkzeughalterung, eines Handlings oder anderer, anzutreibender Vorrichtungen.

Die Erfindung sieht vor, dass die Kurvenscheibe eine Arbeitskurvenscheibe und eine dazu axial beabstandete Rückholkurvenscheibe aufweist und vorteilhaft, dass die Kurvenscheibe aus gehärtetem Material besteht, insbesondere einstückig ausgebildet ist. Dies ermöglicht ein besonders präzise arbeitendes Schlittenaggregat. Aufgrund des gehärteten Materials ergeben sich lange Standzeiten ohne wesentliche Abnutzungserscheinungen an der Lauffläche der Kurvenscheiben. Aufgrund der Einstückigkeit ist die erfindungsgemäße Kurvenscheibe extrem präzise herstellbar, eine Montage einzeln hergestellter Teile mit den unvermeidlichen Toleranzen unterbleibt.

Die Erfindung schlägt vor, an beiden Arbeitsseiten des Schlittens Anschlussvorrichtungen vorzusehen, wobei unter Arbeitsseiten diejenigen Seite des Schlittens verstanden werden, die den oberen bzw. unteren Totpunkt der Linearbewegung des Schlittens erreichen. Die Art der Anschlussvorrichtung richtet sich dabei nach dem Einsatzzweck und kann von einfachen T-Nuten bis hin zu komplexen Anschlusssystemen reichen.

Dadurch, dass der Schlitten wenigstens zweiteilig ausgebildet ist, vorzugsweise mit einer zur Befestigungsebene des Gehäuses parallelen Teilungsfläche, lässt sich mit großem Vorteil in Kombination mit einem ebenso ausgebildetem, wenigstens zweiteiligem Gehäuse ein einfacher Austausch der Kurvenscheibe von einer Bedienseite des Schlittenaggregats her realisieren. Während das Gehäuse und der Schlitten miteinander und an der Sondermaschine verbunden bleiben, kann ein einfacher Austausch der Kurvenscheibe erfolgen.

Die in Ausgestaltung der Erfindung vorgesehenen Schlittenführungen im Inneren des Gehäuses, vorzugsweise in Form einer Mehrzahl von Führungsplatten, ermöglichen die sichere Führung des Schlittens. Erfindungsgemäß ist vorgesehen, dass diese Führungsplatten während eines Kurvenscheibenaustausches ungestört in ihrer Einbaulage verbleiben. Sie sind demnach so angeordnet, dass sie in dem fest mit der Sondermaschine verbundenen Teil des Gehäuses verbleiben. Als Führungen kommen insbesondere wartungsfreie Gleitlager mit Graphitschmierung oder solche aus Spezialbronzen in Frage. Dies ermöglicht die Verwendung der erfindungsgemäßen Schlittenaggregate in Reinräumen oder bei der Herstellung von ölempfindlichen Werkstücken. Anstelle von Führungsplatten können auch Buchsen verwendet werden, falls rotationssymmetrische Schlitten eingesetzt werden sollen. Als Führungen für den Schlitten kommen auch Linearführungen unterschiedlichster Bauformen wie zum Beispiel Rollenschuhe in Frage. Je nach Einsatzzweck kann auch eine Zentralschmierung vorgesehen sein.

Dadurch, dass das erfindungsgemäße Schlittenaggregat eine die Kurvenscheibe tragende Kurvenscheibenwelle aufweist, die mehrteilig ausgebildet ist, wobei zwischen einigen Teilen eine lösbare Arretiervorrichtung so vorgesehen ist, dass die Kurvenscheibe von der Kurvenscheibenwelle entnehmbar ist, wird mit großem Vorteil ein einfacher Austausch der Kurvenscheiben ermöglicht, so dass das erfindungsgemäße Schlittenaggregat leicht von einem auf einen anderen Einsatzzweck anpassbar ist.

Ist die Arretiervorrichtung als Kreuznut mit Nutkeil in den Teilen der Kurvenscheibenwelle ausgebildet, die zusammen mit der Kurvenscheibe entnehmbar sind, und sind andere Teile der Kurvenscheibenwelle in der Vorrichtung verbleibend ausgebildet, vorzugsweise in Lagern verbleibend, wird mit großem Vorteil eine Störung der Lagersituation der Kurvenscheibenwelle beim Kurvenscheibenaustausch vermieden. Dies verlängert die Standzeit und die Präzision des erfindungsgemäßen Schlittenaggregats. Durch die Arretierverbindung wird sichergestellt, dass die Welle als einheitliches Bauteil die Antriebskräfte auf die Kurvenscheibe ohne Verluste überträgt.

Die Aufgabe wird auch durch ein System aus mehreren Schlittenaggregaten gelöst, bei dem einzelne Schlittenaggregate mittels Verbindungswellen an den Enden der Kurvenscheibenwellen oder durch direkten formschlüssigen Eingriff der Kurvenscheibenwellen ineinander miteinander verbunden ausgebildet sind. Gerade durch die Verbindung erfindungsgemäßer Schlittenaggregate ist der Vorteil der geringen Baubreite aufgrund der Orientierung der Kurvenscheibe besonders ersichtlich. Aufgrund der geringen Baubreite können selbst kleinste Werkstücke bearbeitet werden, ohne dass die Werkzeuge über Kröpfungen oder dergleichen an das Werkstück geführt werden müssten.

Die Vorteile der Erfindung werden besonders deutlich, wenn das beschriebene Schlittenaggregat als Steuerung und/oder Antrieb einer Handlingvorrichtung verwendet wird, bei dem dieses mit zwei Anschlussvorrichtungen seines Schlittens mit der Handlingvorrichtung verbunden ist. Unter Handling wird dabei jede Manipulation an einem Werkstück verstanden, die zu einer räumlichen Lageveränderung führt, also Drehungen, Kippungen, Lineartransport, Übergabe, etc. Durch die beidseitige Verbindung eines Schlittens mit einer solchen Handlingvorrichtung werden besonders präzise arbeitende Vorrichtungen erzielt.

Die weitere Aufgabe der Erfindung wird durch eine Handlingvorrichtung, insbesondere Werkstücktransportvorrichtung, mit einem Werkstücktransportkamm, einer mit diesem über Umlenkschenkel gelenkig verbundenen Ausrückvorrichtung, und gegebenenfalls einer Werkstückfixiereinheit, gelöst, wobei Werkstücktransportkamm und Ausrückvorrichtung an je einem Schlittenaggregat gemäß der oben stehenden Beschreibung angeordnet sind. Eine solche Handlingvorrichtung arbeitet präzise, konstant und dauerhaft.

Schließlich erfasst die Erfindung eine Werkstückfixiereinheit, die als Kipphebel ausgebildet ist, der von einem Schlittenaggregat wie vorstehend beschrieben, angetrieben ausgebildet ist.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: eine perspektivische Ansicht eines erfindungsgemäßen Schlitten- aggregats,
- Fig. 2:: eine teilweise geschnittene Seitenansicht eines erfindungsgemä- ßen Schlittenaggregats,
- Fig. 3:: eine teilweise geschnittene Frontansicht eines erfindungsgemä- ßen Schlittenaggregats,
- Fig. 4:: eine perspektivische Ansicht einer zweiten Ausführungsform der Erfindung,
- Fig. 5:: eine teilweise geschnittene Frontansicht der zweiten Ausfüh- rungsform,
- Fig. 6:: ein der Kurvenscheibenwelle und
- Fig. 7:: eine Anordnung mehrerer erfindungsgemäßer Schlittenaggregate.

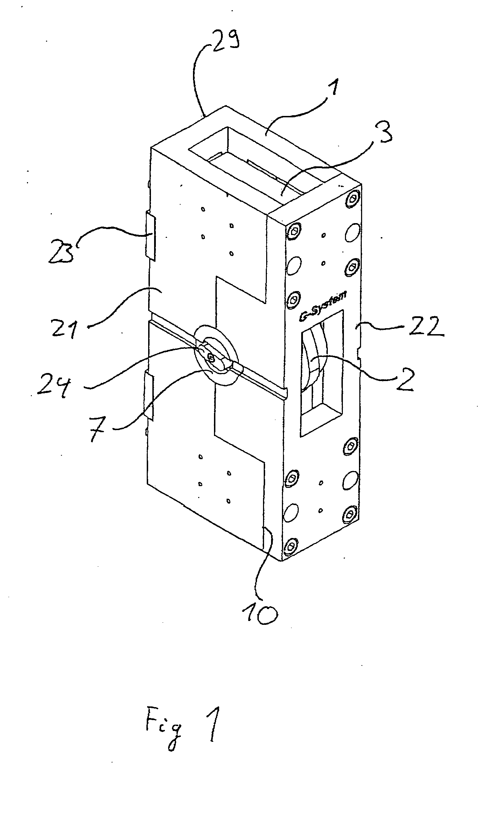

Figur 1 zeigt eine perspektivische Ansicht eines erfindungsgemäßen Schlittenaggregats mit Gehäuse 1, wobei das Gehäuse 1 zweiteilig ausgebildet ist, mit einem rückwärtigen Teil 21 und einem Frontteil 22, wobei Frontteil 22 und rückwärtiger Teil 21 eine Teilungsflächen 10 aufweisen, die parallel zur Befestigungsebene 29 des Gehäuses 1 angeordnet ist. Das Gehäuse 1 ist mit seinem rückwärtigen Teil 21 an einer nicht dargestellten Trägervorrichtung einer nicht dargestellten Sondermaschine befestigt, wozu insbesondere die Befestigungskeile 23, bzw. entsprechende keilförmige Befestigungsnuten 23 dienen. Der Frontteil 22 ist erfindungsgemäß ebenfalls so ausgestaltet, dass er nicht die gesamte Frontseite abdeckend sondern nur einen Teil abdeckend ausgebildet ist. Im Gehäuse 1 ist ein linear beweglicher Schlitten 3 angeordnet und geführt. Innerhalb des Schlittens 3 und des Gehäuses 1 ist eine Kurvenscheibe 2 angeordnet, wobei diese orthogonal zur Befestigungsebene 29 des Gehäuses 1 orientiert ist. Sie ist damit ebenfalls orthogonal zu einer Werkstücktransportrichtung orientiert. In Fig. 1 ist weiterhin eine Öffnung im Gehäuse 1 zu erkennen, in der ein Lager 7 unter einer Abdeckung angeordnet ist. Im Lager 7 ist die Kurvenscheibenwelle 13 gelagert, es kann ein Rollenkugellager, Tonnen- oder Pendellager oder sonstiges geeignetes Lager sein. Gut zu erkennen ist der Kupplungsadapter 24 -eine Stirnkeilverbindung-, der zur Verbindung zweier erfindungsgemäßer Schlittenaggregate dient, und der ein Gegenstück in einer Nut in der Kurvenscheibenwelle 13 auf der nicht dargestellten Seite des Gehäuses 1 hat. Dargestellt sind ebenfalls Bohrungen im Gehäuse 1, die zur Befestigung von Führungsplatten 12 des Schlittens 3 dienen. Die Baubreite dieser Ausführungsform beträgt 51 mm, ist jedoch mittels Anpassung von Wandstärken und Kurvenscheibendicke noch kleiner ausführbar. Mit großem Vorteil lassen sich auf 200 mm somit etwa vier erfindungsgemäße Schlittenaggregate unterbringen. Hierbei kann der Durchmesser der einzelnen Kurvenscheiben wesentlich größer ausfallen, da dieser unabhängig von der Vorrichtungsbreite ist. Die Kurvenscheibe 2 kann sowohl nach vorne als auch gegebenenfalls nach hinten durch einen Schlitz im Gehäuse und/oder der Sondermaschinenwand herausragen.

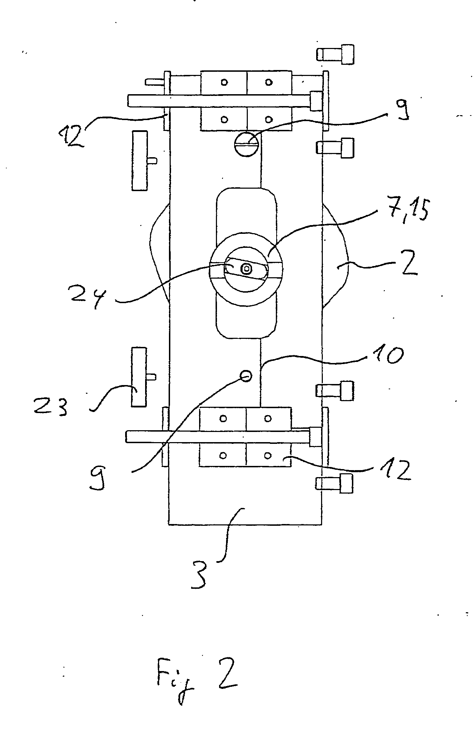

Figur 2 zeigt eine Seitenansicht des erfindungsgemäßen Schlittenaggregates unter Weglassung des Gehäuses 1. Gut zu erkennen sind der zweiteilige Schlitten 3, sowie die Aufnahmeöffnung für die Kurvenscheibenwelle 13 im Schlitten, die in Form einer langlochartigen Ausnehmung ausgebildet ist. Weiterhin zu erkennen sind die Lagerbohrungen 9 der Abnehmerrollen 4, die im Schlitten 3 angeordnet sind. Wie Fig. 2 zu entnehmen ist, weisen die Achsen, auf denen die Abnehmerrollen 4 angeordnet sind, rechts einer Abnehmerrolle 4 einen anderen Durchmesser auf, als links der Abnehmerrolle 4. Das bedeutet, dass eine axiale Verschieblichkeit der Abnehmerrollen 4 mit Vorteil verhindert ist. Weiterhin dargestellt sind die Führungsplatten 12, die zwischen Gehäuse 1 und Schlitten 3 angeordnet sind. Es ist zu erkennen, dass jeweils vier Führungsplatten 13 oberhalb und unterhalb der Kurvenscheibe 2 um den Schlitten 3 herum angeordnet sind. Diese bestehen beispielsweise aus Spezialbronzen, Sintermetallen oder Graphitbronzen, können wie geschildert jedoch auch als Buchsen oder Rollenschuh ausgebildet sein. Erfindungswesentlich ist, dass der Schlitten beidseitig der Kurvenscheibe 2 sicher und wo erforderlich schmiermittelfrei geführt ist. Aus der Zusammenschau von Fig. 1 und Fig. 2 ist deutlich, dass ein Austausch einer Kurvenscheibe 2 gegen eine andere bei eingebautem Schlittenaggregat einfach möglich ist, indem zunächst der Frontteil 22 des Gehäuses 1 gelöst und abgenommen und sodann der Frontteil des Schlittens 3 gelöst und abgenommen wird. Die Kurvenscheibe 2 liegt dann zusammen mit dem ihren Lagern 15 frei und kann aus Bedienrichtung gesehen, nach vorne entnommen werden.

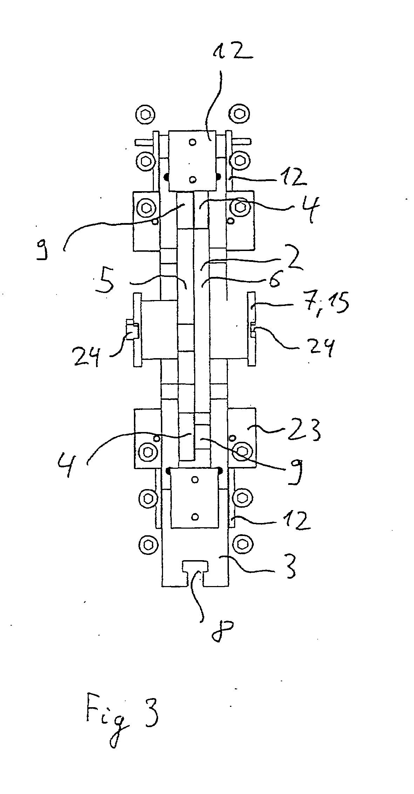

Figur 3 zeigt die Schlittenaggregatansicht von vorne unter Weglassung des Gehäuses 1 und des vorderen Teils des Schlittens 2. Gut zu erkennen ist die Anschlussvorrichtung 8, die erfindungsgemäß zum Anschluß jeglicher anzutreibender Vorrichtungen wie Werkzeug, Werkzeugträger, Handling, Transportvorrichtung vorgesehen ist. Diese ist hier als einfache T-Nut ausgebildet. Jede andere, dem Fachmann bekannte Anschlussvorrichtung ist ebenfalls einsetzbar. Erfindungsgemäß kann der Schlitten 3 so ausgebildet sein, dass er aus dem Gehäuse 1 nach oben herausragt und dort eine zweite Anschlussvorrichtung 8 trägt, die unterschiedlich zur ersten gewählt sein kann. Zu erkennen sind weiterhin die Abnehmerrollen 4, die jeweils an der Arbeitskurvenscheibe 5 und der Rückholkurvenscheibe 6 anliegen und die Wirkverbindung mit dem Schlitten 3 herstellen.

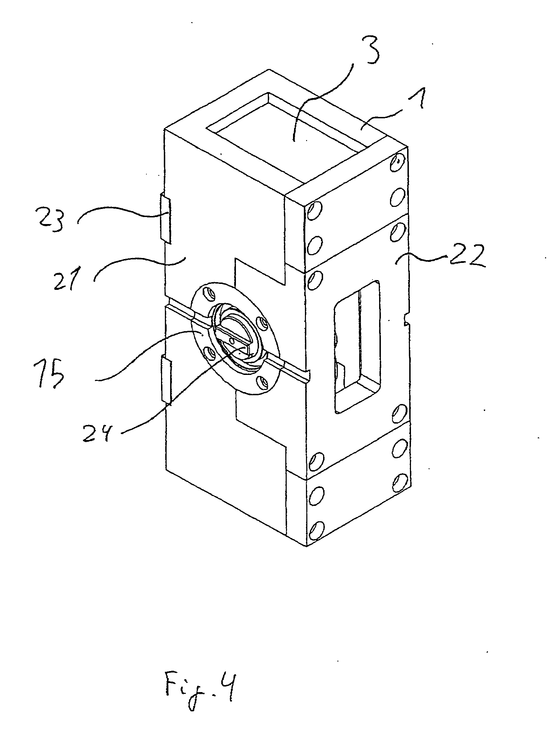

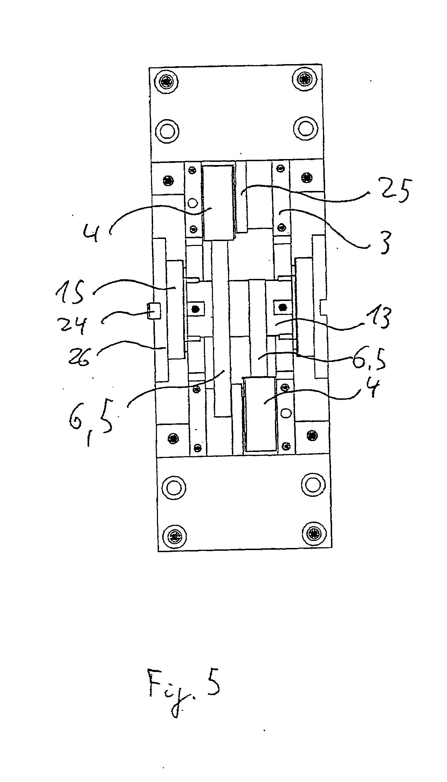

Figur 4 zeigt eine perspektivische Ansicht einer zweiten, breiteren Ausführungsform des erfindungsgemäßen Schlittenaggregates. Auch bei dieser Ausführungsform ist das Gehäuse 1 zweiteilig mit einem rückwärtigen Teil 21 und einem Frontteil 22 ausgestattet, wobei das Frontteil 22 nicht die gesamte Frontseite abdeckt, sondern so geteilt ist, dass die Führungsplatten 12 in ihrer Einbausituation verbleiben, wenn der Frontteil 22 gelöst und abgenommen wird. Diese Ausführungsform unterscheidet sich vor allem durch eine andere Lagersituation sowohl der Kurvenscheibe 2 als auch der Abnehmerrollen 4. Dies ist in Fig. 5 näher dargestellt. Sie ist dazu geeignet, größere Kräfte zu übertragen und für Anwendungen vorgesehen, bei denen größere Hübe oder stärkere Drücke ausgeübt werden müssen. Ihr Einsatzbereich ist daher ein anderer als der der ersten Ausführungsform, die insbesondere für Anwendungen bei kleinen Tischmaschinen und kleinen und kleinsten Werkstücken vorgesehen ist.

Figur 5 zeigt eine geschnittene Frontansicht der zweiten Ausführungsform unter Weglassung des Frontteils 22 und des vorderen Teils des Schlittens 3. Gut zu erkennen ist, dass der Schlitten 3 einen inneren Steg 25 für die Aufnahme der Lagerung der breiteren Abnehmerrollen 4 aufweist. Dies ist erforderlich, um die größeren Kräfte bei dieser Ausführungsform sicher auf den Schlitten 3 zu übertragen. Weiterhin ist die Einbausituation der Kurvenscheibenwelle 13 dargestellt. Die Kurvenscheibe 2 ist auf jeder Seite mit einem Kurvenscheibenwellenteil verbunden. Die Kurvenscheibenwelle 13 besteht aus mehreren Teilen, von denen eines ortsfest in einem Lager 15, hier ein Rollenkugellager mit Lagerdeckel 26, angeordnet ist. Dieses Teil wird als Wellenadapter 14 bezeichnet.

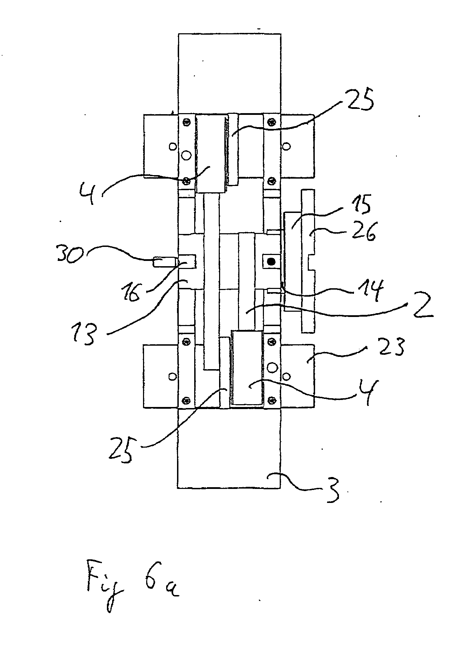

Fig. 6a zeigt ein Detail aus der Lagersituation. Zu erkennen ist die Verbindung zwischen Wellenadapter 14 und Kurvenscheibenwelle 13, wobei der Wellenadapter 14 und das Rollenkugellager 15 beim Ausbau der Kurvenscheibe 2 eingebaut im Gehäuse 1 verbleiben. Der Wellenadapter 14 ist mittels einer Kreuznut 16 in dem Wellenteil, dass zusammen mit der Kurvenscheibe 2 lösbar ist, und darin eingesetztem Nutkeil 17 mit dem lösbaren Teil kraftschlüssig verbunden. Auf der linken Seite der dargestellten Vorrichtung wurden der Lagerdeckel 26, das Rollenlagergehäuse 15, der Wellenadapter 14 sowie der Nutkeil 17 zeichnerisch entfernt. Dargestellt ist die Kreuznut 16 im Wellenteil, der mit der Kurvenscheibe 2 verbunden ist und ein federbelasteter Kugelstift 30, mit dem der Wellenadapter 14 an dem Wellenteil mit Kreuznut 16 befestigt ist. Zur Entnahme der Kurvenscheibe 2 werden nach Entfernung der Nutkeile 17 die lösbaren Teile der Kurvenscheibenwelle 13 nach Drehung der Kurvenscheibe um 90 ° aus dem Wellenadapter 14 entnommen, wobei der Wellenadapter 14 nach vorne offen ist. Auf diese Weise ist ein einfacher Austausch der Kurvenscheiben 2 möglich, so dass das erfindungsgemäße Schlittenaggregat auf einfache und schnelle Weise unkompliziert an geänderte Produktionsparameter der Sondermaschine anpassbar ist.

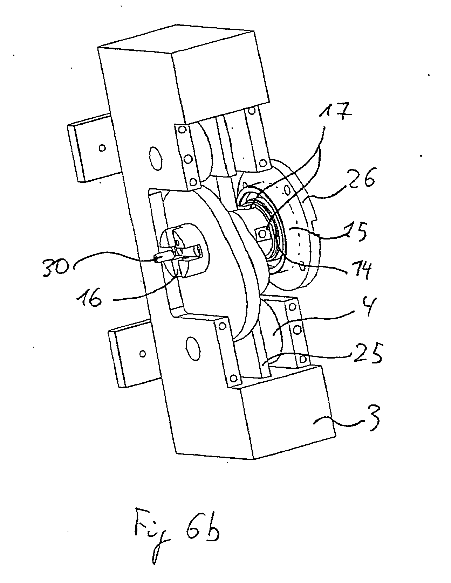

Fig. 6b zeigt die Abbildung aus Fig. 6a in perspektivischer Ansicht.

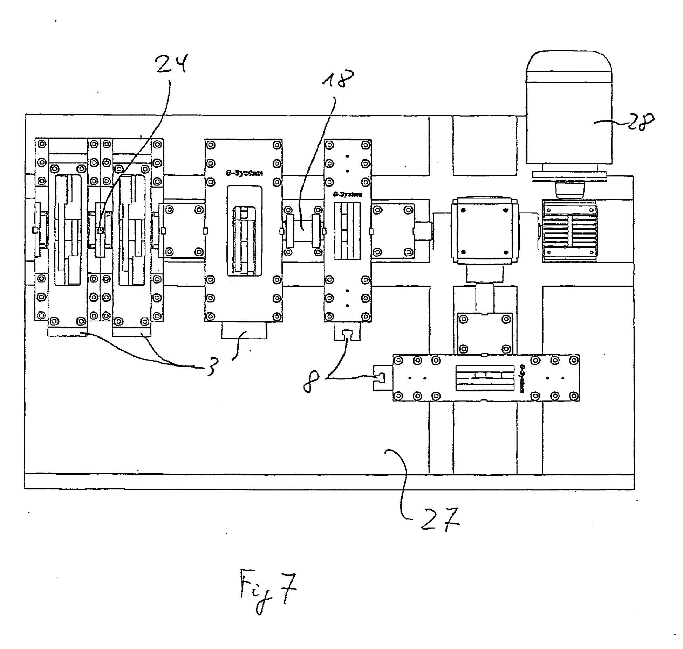

Figur 7 zeigt eine Frontansicht auf einen Mehrfachaufbau mit den erfindungsgemäßen Schlittenaggregaten. An einer Maschinenwand 27 ist ein Schlittenaggregatantrieb 28 dargestellt, der auf fünf Schlittenaggregate wirkt. In der horizontalen Schlittenaggregatreihe sind diese entweder mit einer Verbindungswelle 18 verbunden oder aber direkt über Nut und Kupplungsadapter 24 aneinander gekoppelt. Die Verbindungswelle 18 ist in der Länge auf den für die Handhabung erforderlichen Abstand der Schlittenaggregate angepasst. Dadurch ist eine Anordnung der Schlittenaggregate unabhängig von einem Rastermaß ermöglicht. Die beiden linken Schlittenaggregate sind mit geöffnetem Gehäuse 1 dargestellt, das Gehäuse wurde ebenfalls bei einem Gehäuse um eine Verbindungswelle 18 entfernt. Zu erkennen ist, dass zwei erfindungsgemäße Schlittenaggregate unmittelbar benachbart zueinander angeordnet werden können, ohne dass die Maße der Kurvenscheibe stören können.

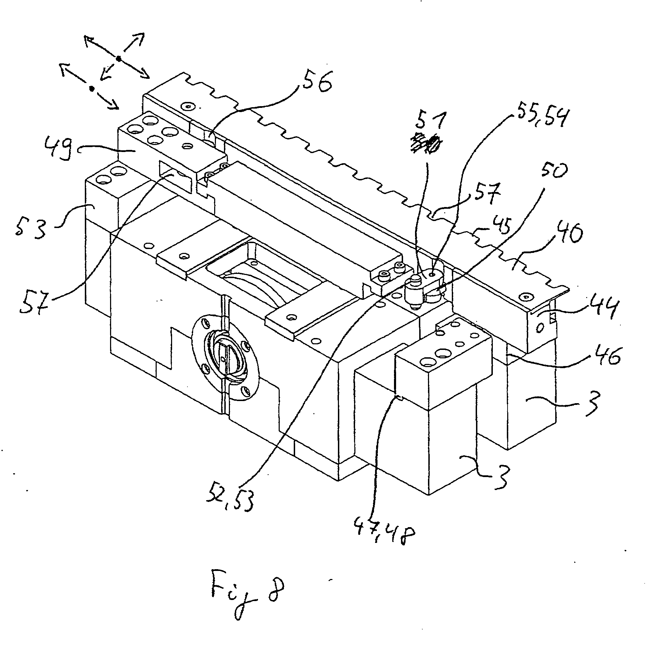

Schließlich gehört zur Erfindung noch eine Verwendung des Schlittenaggregates als Antrieb eines Handlings bzw. das Handling selber. Dies wird anhand der Figuren 8 bis 10 erläutert, die im einzelnen zeigen:
Fig. 8: eine perspektivische Ansicht einer erfindungsgemäßen Werkstücktransportvorrichtung,

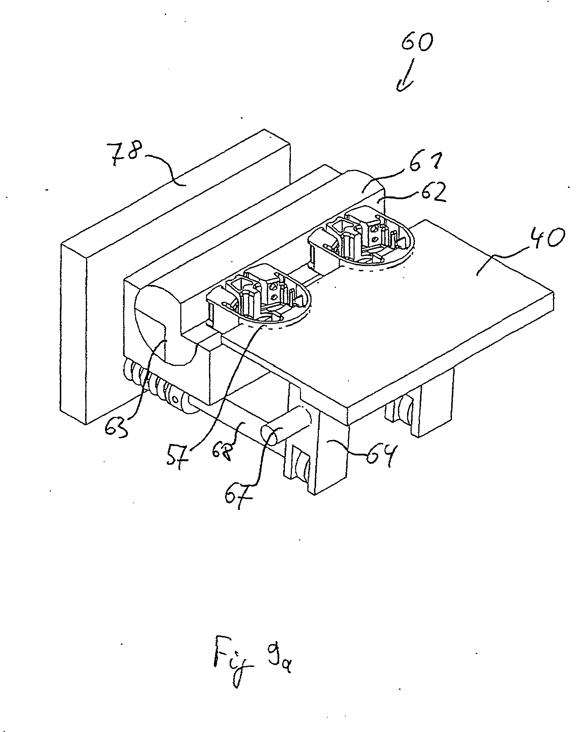

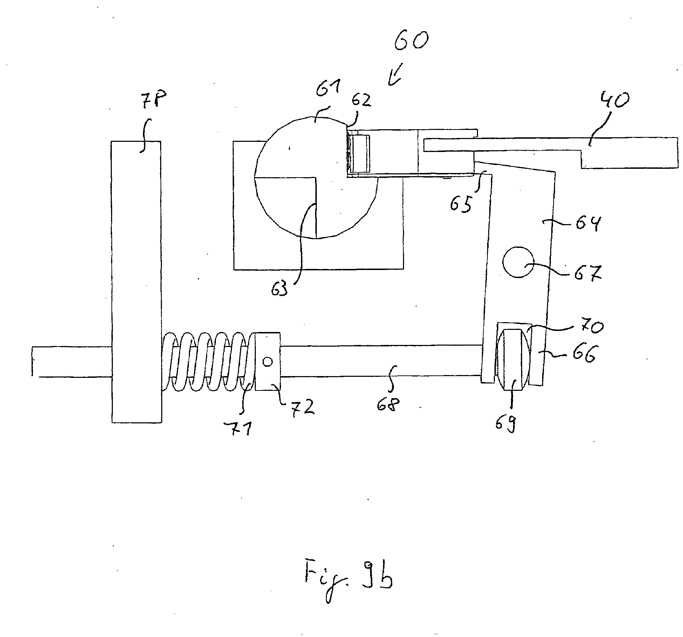

Fig. 9a, b: eine Werkstückklemmvorrichtung unter Verwendung eines erfindungsgemäßen Schlittenaggregats und

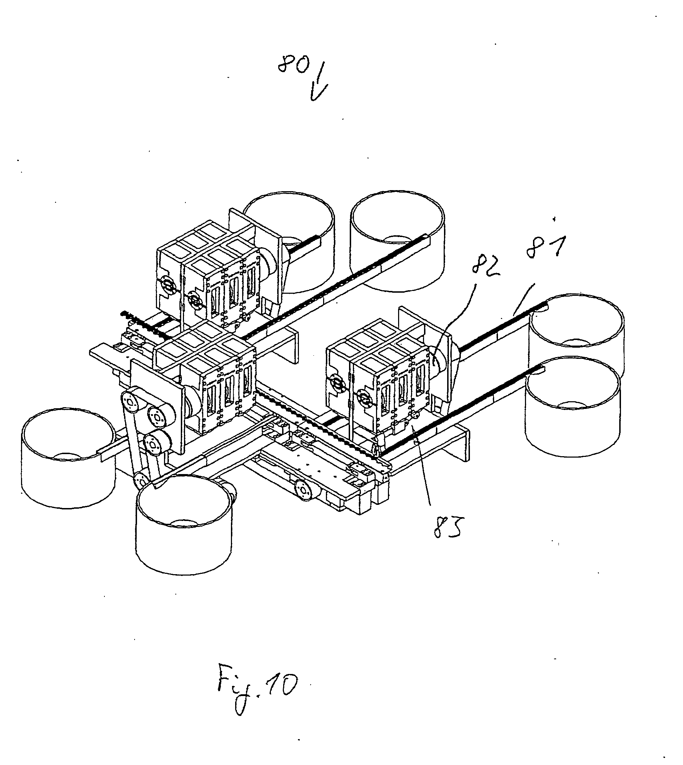

Fig. 10: eine Skizze einer Sondermaschine in linearer Anordnung.

Fig. 8 zeigt eine Ausführungsform der erfindungsgemäßen Werkstücktransportvorrichtung. Diese besteht aus einem Werkstücktransportkamm 40, in dessen zu einer Seite geöffneten Kammern 57 das Werkstück aufgenommen und transportiert wird. Hierzu ist der Werkstücktransportkamm 40 auf einer Schiene 44 angeordnet, so dass die Kammenden 45 über die Schiene 44 herausragen. Die Schiene 44 ist ihrerseits über je einen Mitnehmer 46 an jeweils einem Ende eines Schlittens 3 eines Schlittenaggregats befestigt. Die Mitnehmer 46 weisen dabei eine Feder 47 auf, die in eine Nut 48 auf der den Mitnehmern 46 zugewandten Seite des Schlittens 3 eingreifen. Aufgrund der Anordnung an einem Schlitten 3 kann die Schiene 44 und mit ihr der Werkstücktransportkamm 40 eine lineare Bewegung ausführen, dessen Weite durch die Kurvenscheibe 2 des Schlittenaggregats bestimmt ist. Um den Werkstücktransportkamm 40 ein- und auszurücken, also der Bewegung in Richtung der X-Achse eine in Richtung der Y-Achse hinzuzufügen, ist ein Schieber 49 vorgesehen, die gelenkig mit dem Werkstücktransportkamm 40 verbunden ausgebildet ist. Die gelenkige Verbindung wird dabei durch einen an der Schiene 44 befestigten Umlenkschenkel 50 hergestellt, der gelenkig mit einem Umlenkhebel 51 verbunden ist, der gelenkig mit dem Schieber 49 verbunden ausgebildet ist. Der Umlenkhebel 51 ist oval ausgebildet, wobei im ersten Mittelpunkt eine von einer Achse 52 durchsetzten Bohrung 53 vorgesehen ist. Im anderen Mittelpunkt befindet sich eine Bohrung 54, in die ein Stift 55 eingreift, der fest mit dem Umlenkschenkel 50 verbunden ist. Der Umlenkschenkel 50 weist eine der Rundung des Umlenkhebels 51 angepaßte Ausnehmung 56 auf, in der das eine Ende des Umlenkhebels 51 gleiten kann. Der Schieber 49 ist ebenfalls mit einem Schlittenaggregat verbunden ausgebildet, wobei die Verbindung durch zwei fest mit einem Schlitten 3 verbundenen Mitnehmern 53 hergestellt ist. Der Schieber 49 führt ebenfalls eine lineare Bewegung aus, die parallel zu der des Werkstücktransportkamms 40 ist. Das Schlittenaggregat des Schiebers 49 weist jedoch einen Überhub gegenüber dem des Werkstücktransportkamms 40 auf, so dass der Umlenkhebel 51 eine Bewegung ausführt, die den Umlenkschenkel 50 und damit den Werkstücktransportkamm 40 entweder ein- oder ausrücken. Hierdurch wird ein Werkstück entweder freigegeben oder in eine Kammer 57 zwischen zwei Kammenden 45 aufgenommen. Diese Bewegung wird möglich, da der Schieber 49 im Bereich der Umlenkhebel 51 zwei Kammern 57 aufweist, so dass erstere eine Schwenkbewegung ausführen können.

Die erfindungsgemäß vorgesehenen Schlittenaggregate sind vorzugsweise miteinander gekoppelt, so dass nur ein einziger Antrieb benötigt wird. Die beschriebene Vorrichtung ist zwischen 10 mm und 2000 mm lang, vorzugsweise 512 mm und kann leicht mit anderen gleichartigen Vorrichtungen gekoppelt werden, so dass sich lange Werkstücktransporte realisieren lassen. Erfindungsgemäß ist ebenfalls vorgesehen, dass zwei Vorrichtungen so miteinander koppelbar sind, dass sie sich in ihrer Bedienseite unterscheiden, also ein Werkstück mit seiner rechten und anschließend mit seiner linken Seite in einer Kammer 57 aufgenommen ist. Dies ist immer dann von Vorteil, wenn Komponenten auf unterschiedlichen Seiten eines Werkstücks hinzugefügt werden müssen. Ein Drehen des Werkstücks kann so mit Vorteil unterbleiben.

Die beschriebene Vorrichtung kann mit zumindest einer weiteren Vorrichtung derart kombiniert werden, dass diese gemeinsam auf derselben Seite entlang eines Transportweges positioniert sind und die Kämme 40 im Rastermaß derart aneinander angepasst sind, dass eine nahtlose Übergabe von der einen zur nächsten Vorrichtung gegeben ist. Ebenso können diese Vorrichtungen alternierend einander gegenüberliegend angeordnet sein. Es können auch zwei oder mehrere Vorrichtungen spiegelbildlich zueinander angeordnet sein, so dass während dem Transport durch die einander gegenüberliegenden Kammern 57 der Kämme 40 das zumindest eine Werkstück geklemmt transportiert wird. Dadurch kann ein gesicherter Transport und auch eine zwangsweise Übergabe des transportierten Werkstückes zu einer Montagestation ermöglicht werden oder das Werkstück in einer Montagestation gehalten werden.

Anstelle der Kämme 40 können auch weitere Baugruppen, Werkzeuge oder Handlingvorrichtungen an dem Schlittenaggregat vorgesehen sein. Beispielsweise kann eine Rollenführung an der Schiene befestigt sein, die zusätzlich noch eine Hubbewegung durch das Schlittenaggregat durchführen kann.

Des Weiteren kann diese in Figur 8 beschriebene Anordnung um 90° gedreht zum Einsatz kommen, so dass der Werkstücktransportkamm 40 eine Bewegung in z-Richtung und eine Bewegung in x-Richtung durchführt. Dadurch kann beispielsweise ein auf einem Werkstücktransportträger aufliegendes Werkstück von einer Transportvorrichtung unterhalb des Werkstücktransportträgers in Längsrichtung befördert werden.

Figur 9a,b zeigen eine Ausführungsform einer Werkstückklemmung 60, die in Verbindung mit der zuvor beschriebenen Werkstücktransportvorrichtung einsetzbar ist. Dargestellt sind nur zwei Kammern 57 mit je einem Werkstück. Die Werkstücke werden von dem Werkstücktransportkamm 40 gegen eine Führungsschiene 61 gepresst, die eine erste Führungskante 62 aufweist. Durch Drehung um 180° stellt die Führungsschiene 61 eine zweite Führungskante 63 zur Verfügung, falls anders geformte Werkstücke bearbeitet werden sollen. Beim Ausrücken des Werkstücktransportkamms 40 würden die Werkstücke freigegeben, was im Bereich von Arbeitsstationen nicht gewünscht ist. Um ein Werkstück zu fixieren, schlägt die Erfindung einen Kipphebel 64 mit einem Klemmende 65 und einem Kippende 66 vor, der auf einer Achse 67 zwischen beiden Enden angeordnet ist. Am Klemmende 65 greift ein federbelasteter Stößel 68 mit Kugelkopf 69 in eine Nut 70 des Kipphebels 64 ein. Die Feder 71 stützt sich gegen einen Federring 72 auf dem Stößel 68 ab und liegt mit ihrem freien Ende an einer Platte 78 an, die von den Stößeln 68 durchsetzt wird. Der Stößel 68 ist durch eine nicht dargestellte Ausrückmechanik antreibbar. Diese Ausrückmechanik basiert auf einem erfindungsgemäßen Schlittenaggregat, bei dem die beiden Arbeitsseiten eines Schlittens mit einer kurvigen Fläche nach Art einer Nocke verbunden sind, so dass während der Linearbewegung des Schlittens eine dazu orthogonale Bewegung der Stößel 68 durch die nockenähnlichen Kurvenfläche erzeugt wird.

Figur 10 zeigt schließlich skizzenhaft eine lineare Montagelinie 80, bei der sechs Teile zu einem Werkstück zugefügt werden, wobei der Werkstücktransport von einer erfindungsgemäßen Werkstücktransportvorrichtung durchgeführt wird. Dargestellt sind ebenfalls in jeder Zufuhrlinie 81 drei miteinander gekoppelte erfindungsgemäße Schlittenaggregate, die ein Teilehandling durchführen. Jede Schlittenaggregatkombination ist einzeln zu- und abschaltbar, was durch eine Nullpunktkupplung 82 erfolgt, die nur in einer einzigen Stellung ein- und auskuppelbar ist. Hierdurch geht die unbedingt einzuhaltende Taktung beim Wiedereinkuppeln der Linie nicht verloren und Reparatur- oder Austauscharbeiten sind leicht durchführbar.

Die erfindungsgemäßen Schlittenaggregate können als Umsetzeinrichtung 83 ausgebildet sein, welche beispielsweise eine Greifbewegung einer Greifzange und eine Transport- oder Umsetzbewegung in x- oder y-Richtung und in z-Richtung ermöglicht.

Durch den Einsatz der erfindungsgemäßen Schlittenaggregate wird des Weiteren eine Montagelinie 80 geschaffen, die mit einer einfachen Arbeitsanordnung aufgrund der oberhalb der Werkstücktransportebene angeordneten Schlittenaggregate ausgebildet werden kann. Es genügt jeweils ein Antriebsstrang, der zu einer Gruppe von Schlittenaggregaten führt, um mehrere Schlittenaggregate anzutreiben.

Die Erfindung erlaubt mit großem Vorteil die Verwirklichung einer kleinbauenden Sondermaschine in Tischgröße, bei der beispielsweise eine Tischstanze mit 25 t Pressdruck in der Größe von etwa 20x50x50 cm mit einer erfindungsgemäßen Werkstücktransportvorrichtung und einer oder zwei Arbeitsstationen, jeweils ausgestattet mit erfindungsgemäßen Schlittenaggregaten, zu einer Einheit zusammengefügt sind. Aufgrund des einfachen Aufbaus kann eine solche Sondermaschine an einem einfachen Rahmengestell realisiert werden. Dies liegt vor allem an der geringen Baugröße der Schlittenaggregate, mit denen sich auch kleinste Hübe von wenigen mm mit höchster Präzision verwirklichen lassen.

## Patentansprüche

1. Schlittenaggregat mit einem Gehäuse (1), mit einer Kurvenscheibe (2) und mit einem linear beweglich geführten Schlitten (3), wobei die Kurvenscheibe (2) und der Schlitten (3) in Wirkverbindung miteinander stehen, und wobei die Kurvenscheibe (2) orthogonal zu einer Befestigungsebene (29) des Gehäuses (1) angeordnet ist, und wobei zwischen Kurvenscheiben (2) und Schlitten (3) Abnehmerrollen (4) angeordnet sind und der Schlitten (3) wenigstens eine Abnehmerrollenlagerung (9) aufweist, **dadurch gekennzeichnet, dass** die Kurvenscheibe (2) eine Arbeitskurvenscheibe (5) und eine dazu axial beabstandete Rückholkurvenscheibe (6) aufweist, die Kurvenscheibe (2) axial beidseitig gelagert ausgebildet ist und der Schlitten (3) im Inneren des Gehäuses (1) geführt ausgebildet ist und zwei sich auf beiden Arbeitsseiten des Schlittens (3) gegenüberliegende Anschlussvorrichtungen (8) aufweist.

2. Schlittenaggregat nach Anspruch 1, **dadurch gekennzeichnet, dass** die Kurvenscheibe (2) aus gehärtetem Material besteht, insbesondere einstückig ausgebildet ist.

3. Schlittenaggregat nach einem der vorhergehenden Ansprüche, **dadurch gekennzeichnet, dass** der Schlitten (3) wenigstens zweiteilig ausgebildet ist, vorzugsweise mit einer zur Befestigungsebene (29) des Gehäuses (1) parallelen Teilungsfläche (10).

4. Schlittenaggregat nach einem der vorhergehenden Ansprüche, **dadurch gekennzeichnet, dass** das Gehäuse (1) wenigstens zweiteilig ausgebildet ist, vorzugsweise mit einer zur Befestigungsebene (29) parallelen Teilungsfläche (10) und/oder dass das Gehäuse (1) eine in seinem Inneren angeordnete Schlittenführung (11) aufweist, vorzugsweise in Form einer Mehrzahl von Führungsplatten (12).

5. Schlittenaggregat nach einem der vorhergehenden Ansprüche, **dadurch gekennzeichnet, dass** sie eine die Kurvenscheibe (2) tragende Kurvenscheibenwelle (13) aufweist, die mehrteilig ausgebildet ist, wobei zwischen einigen der Teile eine lösbare Arretiervorrichtung (20) so vorgesehen ist, dass die Kurvenscheibe (2) von der Kurvenscheibenwelle (13) entnehmbar ist.

6. Schlittenaggregat gemäß Anspruch 6, **dadurch gekennzeichnet, dass** die Arretiervorrichtung (20) als Kreuznut (16) mit Nutkeil (17) in den Teilen der Kurvenscheibenwelle (13) ausgebildet ist, die zusammen mit der Kurvenscheibe (2) entnehmbar sind und dass andere Teile der Kurvenscheibenwelle (13) in der Vorrichtung verbleibend ausgebildet sind, vorzugsweise in Lagern (15) verbleibend.

7. System aus mehreren Schlittenaggregaten gemäß einem der vorherigen Ansprüche, **dadurch gekennzeichnet, dass** einzelne Schlittenaggregate mittels Verbindungswellen (18) an den Enden der Kurvenscheibenwellen (13) oder durch direkten formschlüssigen Eingriff der Kurvenscheibenwellen (13) ineinander miteinander verbindbar ausgebildet sind,

8. Verwendung eines Schlittenaggregats nach einem der vorherigen Ansprüche als Steuerung und/oder Antrieb einer Handlingvorrichtung, **dadurch gekennzeichnet, dass** das wenigstens eine Schlittenaggregat einen Schlitten (3) mit zwei Anschlussvorrichtungen (8) aufweist, der mit der Handlingvorrichtung verbunden ausgebildet ist.

9. Handlingvorrichtung, insbesondere Werkstücktransportvorrichtung, mit einem Schlittenaggregat nach einem der Ansprüche 1 bis 7, **dadurch gekennzeichnet, dass** ein Werkstücktransportkamm (40), eine mit diesem über Umlenkschenkel (41) gelenkig verbundenen Ausrückvorrichtung (42), und gegebenenfalls eine Werkstückfixiereinheit (43) vorgesehen ist, wobei der Werkstücktransportkamm (40) und die Ausrückvorrichtung (42) an je einem Schlittenaggregat angeordnet sind.

10. Handlingvorrichtung gemäß Anspruch 9, bei der die Werkstückfixiereinheit (43) als Kipphebel (64) ausgebildet ist, der von einem Schlittenaggregat gemäß einem der Ansprüche 1 bis 8 angetrieben ausgebildet ist.

## Claims

1. Carriage assembly having a housing (1), a cam disc (2) and a carriage (3) which is guided in a linearly movable way, with the cam (2) and the carriage (3) being operatively connected to one another, and whereby the cam disc (2) is orientated orthogonally with respect to a fastening plane (29) of housing (1), and whereby between the cam discs (2) and carriage (3) take-off rolers (4) are disposed and the carriage (3) having at least one take-off roller bearing arrangement (9), **being characterized in that** the cam (2) has a working cam (5) and spaced apart axially therefrom a return cam disc (6), the cam (2) being mounted axially at both sides thereof and the carriage (3) is designed to be guided in the interior of the housing (1) and having two connecting devices (8), being situated opposite on both working sides of the carriage (3).

2. Carriage assembly according to claim 1, **characterized in that** the cam disc (2) is composed of hardened material.

3. Carriage assembly according to one of the preceeding claims, **characterized in that** the carriage (3) is formed in at least two parts, preferably with a parting surface (10) being parallel to the fastening plane (29) of housing (1).

4. Carriage assembly according to one of the preceeding claims, **characterized in that** the housing (1) is formed in at least two parts, preferably with a parting surface (10) being parallel to the fastening plane (29) and/or that the housing (1) has a carriage guide (11) being arranged in its interior, preferably in the form of a plurality of guiding plates (12).

5. Carriage assembly according to one of the preceeding claims, **characterized in that** it has a cam disc shaft (13) wich supports the cam disc (2) and which is of multi-part design, with a detachable locking device (20) being provided between some of the parts in such a way that the cam disc (2) is removable from the cam disc shaft (13).

6. Carriage assembly according to one of the preceeding claims, **characterized in that** the locking device (20) is formed as a cross-shaped groove (16) with a sunk key (17) in those parts of the cam disc shaft (13) which are removable together with the cam disc (2) and **in that** other parts of the cam disc shaft (13) are formed so as to remain in the device, preferably remaining in bearings (15).

7. System composed of a plurality of carriage assemblies according to one of the preceeding claims, **characterized in that** individual carriage assemblies are connectable to one another by means of connecting shafts (18) at the ends of the cam disc shafts (13) or by means of direct form-fitting engagement of the cam disc shafts (13) into one another.

8. Use of a carriage assembly according to one of the preceeding claims as a controller und/or actuator of a handling device, **characterized in that** the at least one carriage assembly comprises a cam (3) with two connecting devices (8), the cam (3) being connected to the handling device.

9. Handling device, especially a work piece transport device having a carriage assembly according to one of the claims 1 to 7, **characterized in that** it is provided a work piece transport comb (40), a disengagement device (42) which is articulatedly connected so said workpiece transport comb (40) by means of a deflectinig limb (41) and if necessary, a workpiece fixation unit (43), whereby the work piece transport comb (40) and the disengagement device (42) are provided each at a carriage assembly.

10. Handling device according to claim 9, in which the work piece fixation unit (43) is embodied as a rocker (64) which is designed to be driven by said carriage assembly according to on of the claims 1 to 8.

## Revendications

1. Groupe de rails comprenant un caisson (1), avec une came (2) et un rail (3) mobile dirigé de façon linéaire, sachant que la came (2) et le rail (3) sont en liaison opérationnelle l'un avec l'autre et sachant que la came (2) est disposée de manière orthogonale à un plan de fixation (29) du caisson (1), et sachant que des galets séparateurs (4) sont disposés entre la came (2) et le rail (3) et que le rail (3) présente au moins un palier de galets séparateurs (9), **caractérisé en ce que** la came (2) présente une came de travail (5) et une came de retour (6) distante axialement de celle-ci, la came (2) est disposée axialement sur les deux côtés et le rail (3) est disposé en étant guidé à l'intérieur du caisson (1) et présente deux dispositifs de raccordement (8) se trouvant opposés l'un à l'autre sur les deux côtés de travail du rail (3).

2. Groupe de rails selon la revendication 1, **caractérisé en ce que** la came (2) est en matériau durci, est formée en particulier d'un seul tenant.

3. Groupe de rails selon la revendication 1 ou 2, **caractérisé en ce que** le rail (3) est formé au moins en deux parties, de préférence avec une face de séparation (10) parallèle au plan de fixation (29) du caisson (1).

4. Groupe de rails selon l'une des revendications précédentes, **caractérisé en ce que** le caisson (1) est formé au moins en deux parties, de préférence avec une face de séparation (10) parallèle au plan de fixation (29) et/ou que le caisson (1) présente un guide de rail (11) disposé à l'intérieur de celui-ci, de préférence sous forme d'une pluralité de plaques de guidage (12).

5. Groupe de rails selon l'une des revendications précédentes, **caractérisé en ce qu'**il présente un arbre à cames (13) portant la came (2), lequel est en plusieurs parties, sachant qu'entre certaines des parties, un dispositif d'arrêt (20) séparable est ainsi prévu que la came (2) peut être enlevée de l'arbre à cames (13).

6. Groupe de rails selon la revendication 6, **caractérisé en ce que** le dispositif d'arrêt (20) est formé en tant qu'encoche croisée (16) avec une cale d'encoche (17) dans les parties de l'arbre à cames (13), lesquelles peuvent être enlevées conjointement avec la came (2), et que d'autres parties de l'arbre à cames (13) sont formées en étant maintenues dans le dispositif, de préférence en étant maintenues en couches (15).

7. Système composé de plusieurs groupes de rails selon l'une des revendications précédentes, **caractérisé en ce que** des groupes de rails individuels sont formés en pouvant être reliés entre eux l'un dans l'autre via des arbres de liaison (18) sur les extrémités des arbres à cames (13) ou par une mise en prise par complémentarité de forme directe des arbres à cames (13).

8. Emploi d'un groupe de rails selon l'une des revendications précédentes en tant que commande et/ou entraînement d'un dispositif de manutention, **caractérisé en ce que** l'au moins un groupe de rails présente un rail (3) avec deux dispositifs de raccordement (8) qui est formé en étant relié au dispositif de manutention.

9. Dispositif de manutention, en particulier dispositif de transport de pièces, comprenant un groupe de rails selon l'une des revendications 1 à 7, **caractérisé en ce qu'**un peigne de transport de pièces (40), un dispositif de désaccouplement (42) relié de manière articulée à celui-ci via des colonnes de déviation (41), et le cas échéant une unité de fixation de pièces (43) sont prévus, sachant que le peigne de transport de pièces (40) et le dispositif de désaccouplement (42) sont disposés sur un groupe de rails respectivement.

10. Dispositif de manutention selon la revendication 9, dans lequel l'unité de fixation de pièces (43) est formée en tant que levier basculant (64) qui est formé en étant entraîné par un groupe de rails selon l'une des revendications 1 à 8.
